# DEMANDE DE BREVET EUROPEEN

(11) **EP 3 005 863 A1**
(43) Date de publication de la demande: **13.04.2016**
(21) Numéro de dépôt: 15184946.0
(22) Date de dépôt: 11.09.2015
(51) Int. Cl.: A01J 25/12

(54) **INSTALLATION AGROALIMENTAIRE POUR LAVER DES MOULES À FROMAGE**

(30) Priorité: 08.10.2014 FR 1459629
(71) Demandeur: Evoli, 25770 Serre les Sapins (FR)
(72) Inventeur: GAILLARD, Pascal, 25770 Serre les Sapins (FR); VITAL, Stéphan, 25170 Pelousey (FR)
(74) Mandataire: Novagraaf Technologies

(57) **Abrégé**

L'invention concerne une installation (1) agroalimentaire pour nettoyer des moules (2) d'égouttage et de pressage destinés à la fabrication de fromage. Selon l'invention l'installation (1) comprend:
- au moins un panier (5) comprenant au moins deux cages (6, 6a, 6b, 6c, 6d) liées entre elles et chaque cage (6, 6a, 6b, 6c, 6d) étant destinées à recevoir au moins une partie du moule (2),
- au moins une rampe (4) comportant des moyens de pulvérisation de fluide en direction du panier,

la rampe (4) et le panier (5) étant animés d'un mouvement relatif de rotation l'un par rapport à l'autre et sont configurés de sorte que les moyens de pulvérisation (19) de fluide pulvérisent un fluide si possible en partie inférieure et en partie supérieure de chaque cage (6, 6a, 6b, 6c, 6d).

## Description

### 1. Domaine de l'invention

L'invention concerne une installation agroalimentaire pour laver des moules d'égouttage et de pressage destinés à la fabrication de fromage, en particulier du fromage à pâte pressée.

### 2. Art antérieur

A l'heure actuelle, il existe deux types de moules : les moules traditionnels, et les moules monobloc.

Les moules traditionnels d'égouttage et de pressage sont lavés par des opérateurs, manuellement, et par trempage dans des bacs de produits chauffés. Les moules de ce genre sont constitués de plusieurs pièces, à savoir : une ceinture en matière plastique ou fibre perforée à sa partie latérale pour former une grille périphérique ; un foncet inférieur en matière plastique, généralement rainuré sur sa face supérieure, disposé à la partie inférieure de la ceinture et constituant le fond du moule ; un premier disque métallique perforé sur toute sa surface et disposé sur la face supérieure rainurée du foncet inférieur ; une virole métallique perforée sur toute sa surface et disposée en doublage sur la périphérie interne de la ceinture ; un foncet supérieur de pressage en matière plastique généralement rainuré sur sa face inférieure et formant couvercle ; et un deuxième disque métallique, perforé sur toute sa surface, associé à la face inférieure du foncet de pressage.

Devant le nombre de pièces que comprend chaque moule et la quantité de fromage fabriquée chaque jour, les opérateurs passent beaucoup de temps et dépensent également énormément d'eau, de produits et d'énergie à les laver et nettoyer. Cette perte de temps influe sur les coûts de fabrication du fromage.

Pour pallier à la complexité des moules traditionnels, des moules monobloc peuvent être utilisés pour la fabrication du fromage. Les moules de ce genre sont composés de seulement deux pièces (au lieu de six pièces pour un moule traditionnel), à savoir : une virole perforée en matière plastique, soudée sur un fond en matière plastique perforé et éventuellement rainuré sur sa face supérieure ; un foncet supérieur de pressage en matière plastique formant un couvercle. A l'intérieur de la virole et sur la face supérieure du fond peut s'ajouter une grille métallique perforée solidaire recouvrant la virole et le fond.

Du fait de leur conception, les moules monoblocs ne peuvent être efficacement lavés manuellement ou par trempage dans un bac de produit. Ils sont généralement lavés dans des tunnels de lavage. Ces machines qui fonctionnent en continu sont très consommatrices en énergie et en produits.

### 3. Objectifs de l'invention

L'invention a notamment pour objectif de pallier tout ou partie des inconvénients de l'art antérieur.

Un objectif de l'invention est de fournir une installation agroalimentaire pour nettoyer des moules d'égouttage et de pressage destinés à la fabrication de fromage de manière automatique.

Un autre objectif de l'invention est de proposer une solution qui soit simple et peu coûteuse, en particulier en temps et en consommation d'eau, de produits et d'énergie.

### 4. Résumé de l'invention

Ces objectifs sont atteints grâce à une installation agroalimentaire pour nettoyer des moules d'égouttage et de pressage destinés à la fabrication de fromage, selon l'invention, l'installation comprend :
- au moins un panier comprenant au moins deux cages liées entre elles et chaque cage étant destinée à recevoir au moins une partie du moule,
- au moins une rampe comportant des moyens de pulvérisation de fluide en direction du panier,
la rampe et le panier étant animés d'un mouvement relatif de rotation l'un par rapport à l'autre et sont configurés de sorte que les moyens de pulvérisation de fluide pulvérisent un fluide au moins en partie inférieure et en partie supérieure de chaque cage.

Cette solution permet de résoudre les problèmes précités. En particulier, cette installation permet grâce à l'agencement de la rampe et du panier de laver et nettoyer au moins deux parties du moule en même temps au lieu d'une partie avec la méthode usuelle. Ainsi, cette solution tout en étant simple et économique de fabrication permet d'une part un gain économique et de temps puisque les opérateurs peuvent s'afférer à d'autres tâches. Par ailleurs, cette installation permet de mieux gérer la consommation en produit de lavage et en eau.

Selon une caractéristique de l'invention, l'installation comprend un bâti sur lequel le panier est monté en rotation autour d'un axe de rotation sensiblement vertical et sur lequel la rampe est fixée.

De manière avantageuse, l'installation comprend au moins un moyen d'entraînement en rotation du panier. De la sorte la rotation du panier est contrôlée.

Plus précisément, le moyen d'entrainement en rotation comporte des éléments coopérant par friction. Cette configuration est simple et peu couteuse.

Afin de faciliter le transport ou encore le nettoyage de l'installation, le panier est amovible par rapport au bâti.

Selon une autre caractéristique avantageuse de l'invention, chaque cage présente une section sensiblement en forme de C avec une paroi latérale, une embase, et une paroi supérieure, chacun de ces éléments étant en forme de grille. La configuration de chaque cage permet de s'adapter à celle des moules destinés à fabriquer le fromage et de permettre une meilleure répartition et évacuation des produits de nettoyage.

Selon encore une caractéristique de l'invention, les cages sont liées entre elles au moyen d'un élément de fixation disposé suivant l'axe de rotation. Cela permet d'une part, une meilleure rotation du panier par rapport au bâti, et d'autre par une meilleur accessibilité du fluide aux moules installés dans les cages car de l'espace est laissé libre entre chaque cage.

De manière avantageuse, mais facultativement, les moyens de pulvérisation de fluide comportent des buses.

Selon encore une caractéristique de l'invention, la rampe présente des bras portant les buses, chaque bras s'étendant entre deux cages et en regard des éléments de fixation. Ainsi, grâce à la configuration des paniers montés en rotation et à celle de la rampe, le nettoyage des différentes parties du moules est optimisé. Toutes les surfaces sont ainsi nettoyées.

Afin d'améliorer l'évacuation des produits de nettoyage et de l'eau, chaque embase présente une inclinaison par rapport à un plan perpendiculaire à l'axe de rotation.

### 5. Liste des figures

D'autres caractéristiques et avantages innovants ressortiront de la description ci-après, fournie à titre indicatif et nullement limitatif, en référence aux dessins annexés, dans lesquels :
- La figure 1 est une vue en coupe longitudinale d'une installation agroalimentaire selon l'invention dans une situation d'utilisation;
- La figure 2 est une vue de côté d'une installation agroalimentaire sur laquelle sont installées des moules pour fabriquer du fromage selon l'invention ;
- La figure 3 est une vue de côté d'un exemple de panier selon l'invention;
- La figure 4 est une vue en perspective d'un exemple de panier selon l'invention ; et,
- La figure 5 est vue de dessus d'une installation agroalimentaire selon l'invention comprenant un exemple de moyen d'entrainement des paniers.

### 6. Description détaillée

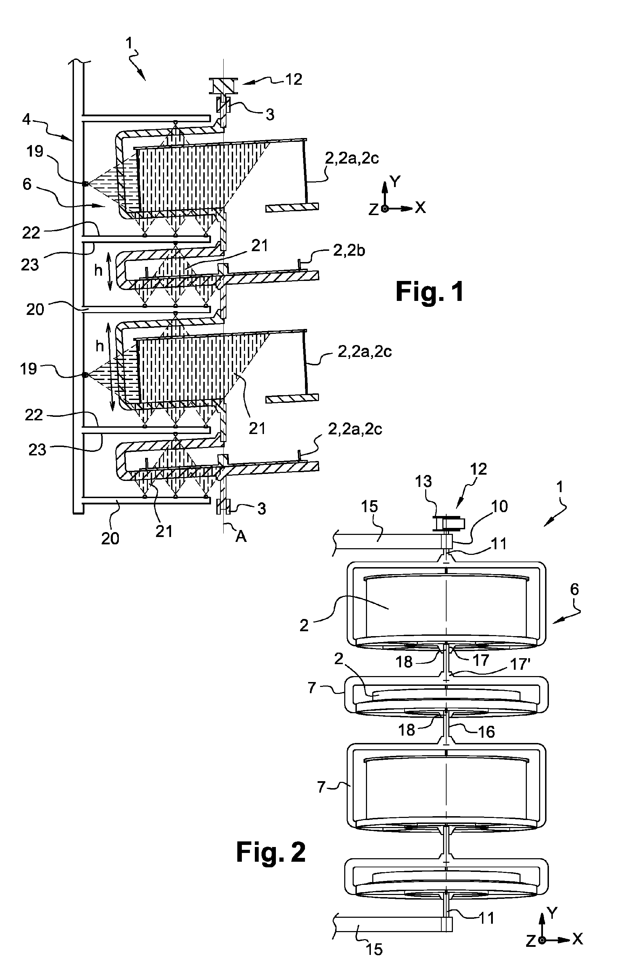

En référence à la figure 1, est représenté une installation 1 agroalimentaire pour nettoyer des moules 2 d'égouttage et de pressage destinés à la fabrication de fromage. Ces moules 2 de pressage et d'égouttage sont particulièrement destinés aux fromages à pâtes pressés à partir de lait caillé. Comme décrit précédemment, les moules particulièrement concernés dans la présente invention sont des moules monoblocs qui comportent une virole 2a perforée soudée sur un fond perforé et éventuellement rainurée sur sa face supérieure, un foncet 2b supérieur de pressage, une grille perforée destiné à recouvrir la virole et le fond 2c. Ces éléments peuvent être réalisés dans un matériau plastique ou métallique.

Comme nous pouvons le voir sur les figures 1 et 2, l'installation 1 agroalimentaire comprend un bâti 3 fixe sur lequel est montée au moins une rampe 4 d'alimentation fluidique (eau et/ou produit de lavage) et un panier 5 coopérant avec la rampe 4. Cette dernière comporte des moyens de pulvérisation 19 de fluide en direction du panier.

Pour faciliter la compréhension de l'invention, nous considérons que la rampe 4 comprend un corps allongé suivant un axe Y longitudinal, ici vertical, en référence à la figure 1 et dans le cadre de son utilisation. Est également représenté l'axe horizontal X qui est perpendiculaire à l'axe Y longitudinal horizontal et à un axe transversal Z de sorte que ces trois axes X, Y, Z forment un repère orthogonal direct tel qu'illustré sur les figures 1 et 2. Les termes « inférieur », « supérieur », haut, bas sont définis par rapport à l'axe vertical Y.

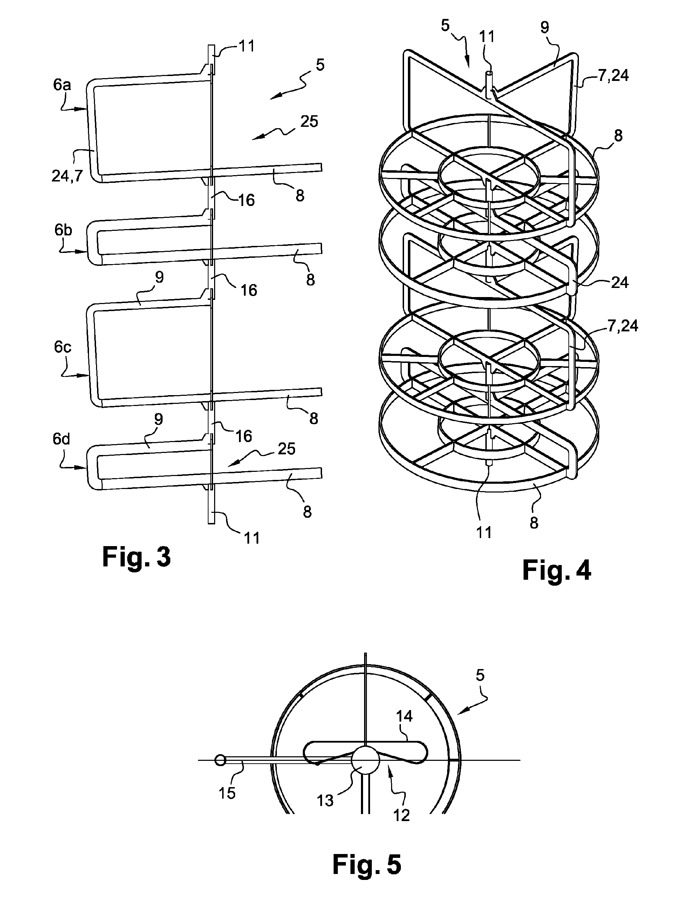

Le panier 5 est monté, de manière amovible, sur la bâti 3 et s'étend le long de l'axe Y. La rampe 2 et le panier 5 sont animés d'un mouvement relatif de rotation l'un par rapport à l'autre suivant un axe de rotation A. Chaque panier 5 comprend au moins deux cages 6 destinées chacune à recevoir au moins une partie des moules 2. Ici sont illustrées quatre cages 6a, 6b, 6c, 6d qui sont disposées les unes au-dessus des autres suivant l'axe Y. La rampe et le panier sont configurés de sorte que les moyens de pulvérisation 19 de fluide pulvérisent un fluide au moins en partie inférieure et en partie supérieure de chaque cage 6a, 6b, 6c, 6d. En particulier, et comme nous pouvons le voir sur les figures 3 et 4, chaque cage 6a, 6b, 6c, 6d présente une section sensiblement en forme de C avec une paroi latérale 7, une embase 8, et une paroi 9 supérieure. La paroi latérale 7, l'embase 8 et la paroi 9 supérieure sont en forme de grille. En d'autres termes, chacun de ces éléments sont ajourés pour éviter que l'eau ne stagne dans les cages 6a, 6b, 6c, 6d et que les moules soient accessibles. Dans cet exemple de réalisation, l'embase 8 présente une section circulaire. Bien entendu, l'embase 8 peut présenter une section rectangulaire ou autre apte à coopérer avec la rampe 4 et à recevoir les parties des moules 2. La paroi latérale 7 présente une hauteur h adaptée à la partie de moule 2 à laver. Par exemple, les cages 6a et 6c présentent une hauteur supérieure à celle de la virole 2a ou de la grille 2c constituant le moule 2 tandis que les cages 6b et 6d présentent une hauteur supérieure à celle du foncet 2b. La hauteur de la virole 2a est supérieure à celle du foncet. En outre, la paroi latérale 8 est formée d'au moins trois lattes 24 disposées radialement par rapport à l'embase 8 et répartie régulièrement autour du centre de l'embase 8. Cette latte 24 dans le présent exemple s'étend en partie supérieure de la cage 6a, 6b, 6c, 6d pour former la paroi supérieure 9. La paroi latérale 7 comprend également une ouverture 25 par laquelle la partie de moule 2, 2a, 2b, 2c est insérée.

Le bâti 3 comprend des moyens de fixation 10 qui sont agencés en partie inférieure et supérieure du panier 5 pour maintenir et supporter celui-ci par rapport à la rampe 4. Pour cela, le panier 5 comporte des éléments de connexion 11 qui sont installés en partie supérieure et inférieure du panier 5 de sorte à coopérer avec les moyens de fixation 10 du bâti 3. Ces éléments de connexion 11 sont chacun disposés au centre de la paroi supérieure 9 (de la cage supérieure 6a), suivant l'axe de rotation A, et au centre de l'embase 8 (de la cage inférieure 6d) suivant l'axe de rotation A. Dans le présent exemple, l'élément de connexion 11 comprend une tige s'insérant dans une gorge prévue sur une traverse 15 du bâti 3. Le panier 5 est monté en rotation sur le bâti 3 autour de l'axe A sensiblement vertical et parallèle à l'axe Y. L'installation 1 comprend en outre un moyen d'entrainement 12 en rotation du panier 5 par rapport à la rampe 4 et au bâti 3. Le moyen d'entraînement 12 est installé en partie supérieure du bâti 3. Le moyen d'entrainement 12 en rotation comporte des éléments coopérant par friction. Dans cet exemple de réalisation illustré sur la figure 5, les éléments coopérant par friction comportent un galet de guidage 13 tournant en rotation autour d'un axe coaxial à l'axe de rotation A. Ce galet de guidage 13 est monté sur l'élément de connexion 11 (ici la tige) s'étendant depuis la paroi supérieure 9 de la cage supérieure 6a. Le galet 13 coopère par friction avec une courroie 14 agencée sur le bâti 3. Le moyen d'entrainement 12 pourrait être installé en partie inférieure du panier pour l'entrainer en rotation.

Les cages 6 sont liées entre elles suivant une liaison encastrement via un élément de fixation 16. Ce dernier s'étend suivant l'axe A de rotation entre chaque cage 6. Plus précisément, l'élément de fixation 16 présente une première extrémité 17 destinée à s'insérer dans un orifice 18 d'une embase 8 où elle sera bloquée par une butée (non représentée) dans cet orifice 18 et une deuxième extrémité 17' qui est formée d'une seule pièce avec la paroi supérieure 9 d'une cage 6 située en-dessous. Dans cet exemple de réalisation, l'élément de fixation 16 comprend un arbre. Ainsi toutes les cages 6 du panier 5 sont solidaires en rotation et tournent en même temps lorsque le moyen d'entrainement12 entraine le panier 5 en rotation.

Les moyens de pulvérisation 19 de fluide comportent dans cet exemple de réalisation des buses alimentées en fluide (eau et/ou produits de lavage) sous pression à travers de la rampe 4. La rampe 4 est alimentée en fluide en provenance d'un réservoir (non représenté) ou d'un circuit d'alimentation fluidique (non représenté). La rampe 4 comprend une pluralité de bras 20 qui s'étendent depuis le corps de la rampe 4 vers les cages 6 suivant l'axe longitudinal horizontal X. Selon un exemple de réalisation, chaque bras 20 s'étend entre deux cages 6, 6a, 6b, 6c, 6d et en regard des éléments de fixation 16. Le corps de la rampe et deux bras 20 de la pluralité de bras 20 présentent ainsi une section en forme de C complémentaire avec la forme en C des cages 6, 6a, 6b, 6c, 6d. Sur la figure 1, les bras 20 présentent chacun une surface supérieure 22 sur laquelle au moins deux buses sont installées et une surface inférieure 23 sur laquelle au moins une buse est installée. Bien entendu, la surface supérieure 22 du bras situé en partie supérieure de l'installation ne porte de pas de buses. De même, la surface inférieure 23 du bras 20 situé en partie inférieure de l'installation ne porte pas de buses. Des buses sont également disposées sur le corps de la rampe 4. Les jets 21 de fluides sont donc orientés suivant les axes X et Y. Les jets 21 des buses situées sur les surfaces inférieures 23 sont orientés vers le bas et les jets 21 des buses situées sur les surfaces supérieures 22 sont orientés vers le haut. Du fait de la configuration du panier 5 sous forme d'une succession de sommets et de creux (coupe longitudinale sur la figure 1) suivant l'axe X, les bras 20 sont disposés entre chaque creux formé entre l'embase. Ainsi, les buses pulvérisent de manière uniforme un jet 21 de fluide sur au moins la moitié de la surface de la partie de moule à nettoyer. Le panier 5 pivotant par rapport à la rampe 4, toutes les surfaces des différentes parties du moule sont lavées et nettoyées. Afin de favoriser l'écoulement du fluide, chaque embase 8 présente une inclinaison par rapport à un plan perpendiculaire à l'axe A de rotation. De la sorte le fluide peut s'écouler plus facilement des différentes parties du moule 2. L'inclinaison de l'embase 8 est orientée à l'opposé de l'ouverture 25 de sorte que la partie de moule 2, 2a, 2b, 2c disposée dans une cage 6, 6a, 6b, 6c, 6d soit retenue par les lattes 24 de la paroi latérale 7.

L'invention est décrite dans ce qui précède à titre d'exemple. Il est entendu que la personne de l'art est à même de réaliser différentes variantes de réalisation de l'invention, en associant par exemple les différentes caractéristiques ci-dessus prises seules ou en combinaison, sans pour autant sortir du cadre de l'invention.

## Revendications

1. Installation (1) agroalimentaire pour nettoyer des moules (2) d'égouttage et de pressage destinés à la fabrication de fromage, l'installation (1) étant **caractérisée en ce qu'**elle comprend :
- au moins un panier (5) comprenant au moins deux cages (6, 6a, 6b, 6c, 6d) liées entre elles et chaque cage (6,6a, 6b, 6c, 6d) étant destinée à recevoir au moins une partie du moule (2, 2a, 2b, 2c),
- au moins une rampe (4) comportant des moyens de pulvérisation (19) de fluide en direction du panier (5),
la rampe (4) et le panier (5) étant animés d'un mouvement relatif de rotation l'un par rapport à l'autre et sont configurés de sorte que les moyens de pulvérisation (19) de fluide pulvérisent un fluide au moins en partie inférieure et en partie supérieure de chaque cage (6, 6a, 6b, 6c, 6d).

2. Installation (1) agroalimentaire selon la revendication 1, **caractérisée en ce qu'**elle comprend un bâti (3) dans lequel le panier (5) est monté en rotation autour d'un axe de rotation (A) sensiblement vertical et sur lequel la rampe (4) est fixée.

3. Installation (1) agroalimentaire selon la revendication 2 caractérisée en ce quelle comprend au moins un moyen d'entraînement (12) en rotation du panier (5).

4. Installation (1) agroalimentaire selon la revendication 3, **caractérisée en ce que** le moyen d'entrainement (12) en rotation comporte des éléments coopérant par friction.

5. Installation (1) agroalimentaire selon la revendication 2, **caractérisée en ce que** le panier (5) est amovible par rapport au bâti (3).

6. Installation (1) agroalimentaire selon l'une quelconque des revendications 1 à 5, **caractérisée en ce que** chaque cage (6, 6a, 6b, 6c, 6d) présente une section sensiblement en forme de C avec une paroi latérale (7), une embase (8), et une paroi supérieure (9), chacun de ces éléments étant en forme de grille.

7. Installation (1) agroalimentaire selon l'une quelconque des revendications 2, 5 ou 6, **caractérisée en ce que** les cages (6, 6a, 6b, 6c, 6d) sont liées entre elles au moyen d'un élément de fixation (16) disposé suivant l'axe (A) de rotation.

8. Installation (1) agroalimentaire selon la revendication 1, **caractérisée en ce que** les moyens de pulvérisation (19) de fluide comportent des buses.

9. Installation (1) agroalimentaire selon les revendications 7 et 8, **caractérisée en ce que** la rampe (4) présente des bras (20) portant les buses, chaque bras (20) s'étendant entre deux cages (6, 6a, 6b, 6c, 6d) et en regard des éléments de fixation (16).

10. Installation (1) agroalimentaire selon l'une quelconque des revendications 2 à 7 et 9, **caractérisée en ce que** chaque embase (8) présente une inclinaison par rapport à un plan perpendiculaire à l'axe (A) de rotation.
